# EUROPÄISCHE PATENTANMELDUNG

(11) **EP 0 844 718 A2**
(43) Veröffentlichungstag der Anmeldung: **27.05.1998**
(21) Anmeldenummer: 97118547.5
(22) Anmeldetag: 24.10.1997
(51) Int. Cl.: H02G 15/013, H02G 15/192

(54) **Dichtungsring aus elastischem Kunststoffmaterial für Kabelgarnituren**

(30) Priorität: 21.11.1996 DE 19648293
(71) Anmelder: RXS Kabelgarnituren Gesellschaft mit beschränkter Haftung, 58093 Hagen (DE)
(72) Erfinder: Zimmer, Rainer, 58579 Schalksmühle (DE)
(74) Vertreter: Jakob, Walter

(57) **Zusammenfassung**

Bei der Erfindung handelt es sich um einen Dichtungsring (DR) für Kabelgarnituren mit stirnseitigen Dichtungskörpern (DK) und einem überdeckenden Muffenrohr. Der Querschnitt des Dichtungsrings (DR) ist X-förmig ausgebildet und wird in eine Dichtungsnut (DN) eines Dichtungskörpers (DK) eingesetzt.

## Beschreibung

Die Erfindung betrifft einen Dichtungsring aus elastischem Kunststoffmaterial für Abdichtungen in einer Dichtungsnut zwischen einem scheibenförmigen Dichtungskörper und einem aufgesetzten Muffenrohr bei Kabelgarnituren.

Bisher sind schlauchförmige Runddichtungen in Dichtungsbereichen zwischen den stirnseitigen Dichtungskörpern und dem Muffenrohr einer Kabelgarnitur üblich. Derartige Runddichtungen werden als langgestreckte Abschnitte verwendet, in deren Enden ein Verbindungsglied bzw. Verbindungselement in die Innenöffnungen der schlauchförmigen Runddichtung zur Überbrückung der Stoßstelle eingeführt wird. Eine solche schlauchförmige Runddichtung mit einem eingesetzten Überbrückungsglied reicht im allgemeinen für die gestellten Forderungen aus. Derartige Ausführungsformen mit kreisförmigem Querschnitt sind aus der europäischen Patentanmeldung EP 0 417 608 - A2 und dem europäischen Patent EP 0 443 118 - B1 bekannt, wobei in der letztgenannten Schrift beschrieben ist, daß zusätzlich zum Überbrückungslied in die Enden der Runddichtung Kupplungsglieder in Form von Rastelementen eingesetzt sind.

Aufgabe vorliegender Erfindung ist nun, eine Dichtung für den Einsatz bei Kabelmuffen im Dichtungsbereich Muffenrohr/Dichtungskörper zu schaffen, deren Aufbau im Stoßbereich vereinfacht und deren Dichtungsverhältnisse im gesamten Dichtungsbereich verbessert sind.

Die gestellte Aufgabe wird mit einem Dichtungsring der eingangs erläuterten Art dadurch gelöst, daß der Dichtungsring X-förmigen Querschnitt aufweist, so daß parallele, umlaufende Dichtungslinien durch die Enden der X-Form in der Dichtungsnut des Dichtungssystems gebildet sind mit jeweils dazwischen liegenden umlaufenden Längshohlräumen in Form von Einsenkungen.

An dem Dichtungsring gemäß der Erfindung sind nun wesentliche Vorteile darin zu sehen, daß die Anzahl der erforderlichen Einzelteile verringert worden ist und daß die Querschnittsform zu besseren Dichtungsverhältnissen führt, wobei der Kraftfluß durch den Querschnitt optimiert und die Unstetigkeiten über den Umfang der Dichtung hinweg verringert werden konnten. Dieser Dichtungsring kann sowohl als endlos verklebte oder als geteilte, mit einem Verbindungselement verbindbare Dichtungseinheit verwendet werden. Für den Dichtungsring wird ein Elastomer wie zum Beispiel Silikonkautschuk eingesetzt, der beispielsweise auch auffällig gefärbt sein kann. Bei der geklebten Version wird ein Kunststoffkleber, zum Beispiel Elastosil E41 der Firma Wacker verwendet, doch können auch andere, auf das jeweils verwendete Material des Dichtungsringes abgestimmte Kleber eingesetzt werden. Das Material des Dichtungsringes, der aus Vollmaterial hergestellt ist, hat eine shore-Härte von 40° **±** 20 oder 30 ± 5.

Der geteilte Dichtungsring, der erst bei der Montage endlos gemacht wird, ist an beiden Enden mit sackförmigen Schlitzen versehen, in die ein die Stoßstelle überbrückendes Verbindungselement eingesetzt wird. Dieses Verbindungselement muß rutschsicher verankert sein. Eine solche Rutschsicherung wird beispielsweise durch Anordnen von Widerhaken auf der Oberfläche des Verbindungsgliedes erreicht. Dadurch ist ein Herausrutschen weitestgehend verhindert. Zweckmäßigerweise ist das Verbindungselement auch in Umfangsrichtung auf den entsprechenden Dichtungskörperdurchmesser vorgebogen, so daß in diesem Bereich keine Spannungen durch Verformungen auftreten. Das Verbindungselement besteht aus Kunststoff oder Metall, vorzugsweise aus rostfreiem Stahl.

Die Besonderheit des Dichtungsringes besteht darin, daß der aus Vollmaterial bestehende Strang einen Querschnitt aufweist, der mehrere parallele umlaufende Dichtungslinien entstehen läßt, wobei zwischen diesen Dichtungslinien umlaufende Längshohlräume gebildet werden. Als Querschnitt eignet sich gemäß der Erfindung besonders eine Rechteckform, die an den Ecken abgerundet ist und deren Seitenflächen längsverlaufend eingedellt sind, so daß bei Anlage an ebenen Dichtungsflächen der Dichtungsnut die angesprochenen Längshohlräume mit zwei seitlichen Dichtungslinien gebildet werden. Bei Druck auf den Dichtungsring, das heißt beim Schließen des Dichtungssystems, erfolgt die Dichtung in erhöhtem Maße entlang der Dichtungslinien an den Rändern der Längshohlräume. Eine derartige Querschnittsform ähnelt im wesentlichen einer X-Form, wie die Querschnittsform des erfindungsgemäßen Dichtungsringes der Einfachheit wegen weiterhin bezeichnet wird. Diese Ausdrucksform ist auch im Patentanspruch 1 gewählt, um die Gestaltung des Querschnitts des Dichtungsringes in knapper Form charakterisieren zu können. Durch die Darstellung der X-Form wird auch besser deutlich, was gemeint ist, wenn deren Enden längsverlaufende Dichtungslinien beim Aufsetzen entstehen lassen, zwischen denen längsverlaufende Dichtungshohlräume gebildet sind.

Zusätzlich wird bei der Einlage des Dichtungsringes ein Gleitmittel, z.B. Silikonfett, in der Dichtungsnut oder auf dem Dichtungsring aufgetragen, um die Dichtverhältnisse zu verbessern. Bei dem ursprünglichen Dichtungssystem mit einer Runddichtung wird jedoch leicht das Gleitmittel durch einen 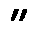 Scheibenwischereffekt" aus dem Dichtbereich geschoben, so daß die Dichtwirkung nachläßt. Bei der Querschnittsform gemäß der Erfindung ist von Vorteil, daß sich in den ausgebildeten Längshohlräumen gewissermaßen ein Gleitmittelreservoir ausbildet, so daß das Gleitmittel bei Relativbewegungen des Dichtungsringes zum Muffenrohr nicht durch Wischeffekte aus der Dichtungszone entfernt wird.

Die gesamte Kraft am Umfang wird nun im Gegensatz zur früheren breiten Auflagefläche auf zwei schmale Auflageflächen verteilt, wobei dazwischen der umlaufende Längshohlraum gebildet ist.

So wurden nun mehrere Ziele erreicht, die im folgenden aufgezahlt sind:
- Aufgrund der geringeren Auflagefläche ergeben sich entlang der Dichtlinien höhere Dichtkrafte bei unveränderter Gesamtkraft gegen das Muffenrohr.
- Durch die erhöhte Dichtkraft entlang der Dichtlinien kann das Inlet als Gegenlager für die Längsdichtung entfallen
- Zwei Dichtzonen unterbrechen den Leckpfad und erhöhen dadurch die Dichtsicherheit.
- Die Längshohlräume zwischen den beiden Dichtlinien dienen als Gleitmittelreservat, so daß bei Relativbewegungen zwischen dem Dichtungsring und dem Muffenrohr genügend Gleitmittel zur Verfügung steht.
- Aufgrund des neuen Querschnitts beträgt der gesamte Verformungsweg im Dichtungssystem, das ist der Weg, den das Muffenrohr beim Verschließen zurücklegen muß, nur noch 2 mm gegenüber vormals 4 mm. Dadurch ergeben sich einfachere Verschlußverhältnisse.
- Die gesamte Verformung des Dichtungsringes erfolgt nun durch elastische Verformung des Dichtmaterials; Biegekräfte sind dadurch an der Dichtkraft nur noch minimal beteiligt.
- Keine bzw. nur minimale Unstetigkeit über dem Umfang. Dadurch kann das Muffenrohr über den ganzen Umfang auf dem Dichtungskörperflansch aufliegen, so daß das Eindringen von Schmutz in den Dichtungsbereich verhindert wird. Bei bisherigen Ringdichtungen ergaben sich unterschiedliche Querschnitte infolge von Einlagen innerhalb der Ringdichtung.

Das Material für den Dichtungsring wird in seiner Elastizität und in seiner Härte im allgemeinen so optimiert, daß alle Forderungen bei Niedrigtemperaturanwendung erfüllt werden.

Die Erfindung wird nun anhand von vier Figuren näher erläutert.
- Figur 1: verdeutlicht den Einsatz eines Dichtungsringes bei einer Kabelgarnitur.
- Figur 2: zeigt den geschlossenen Dichtungsring.
- Figur 3: zeigt den Querschnitt des Dichtungsringes.
- Figur 4: zeigt ein Verbindungselement für den geteilten Dichtungsring.

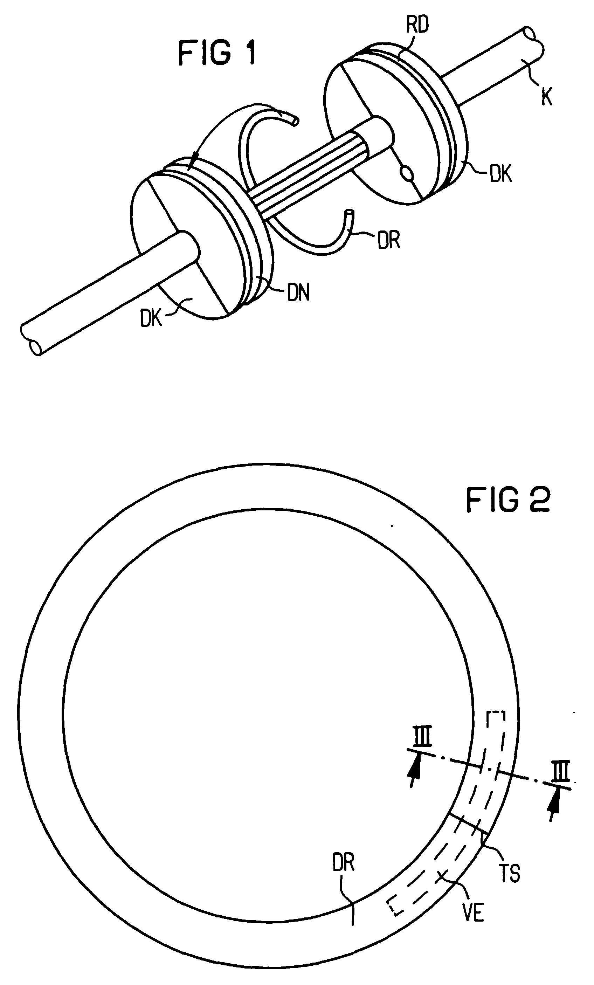

In Figur 1 wird dargestellt, daß der Dichtungsring DR gemäß der Erfindung auf den Umfang eines Dichtungskörpers DK in einer Dichtungsnut DN eingesetzt wird. Die Dichtungskörper DK befinden sich an den stirnseitigen Enden einer Kabelgarnitur, über die nach Einlage des Dichtungsringes DR ein Muffenrohr aufgezogen wird. Innerhalb der Kabelgarnitur werden die Kabel K gespleißt.

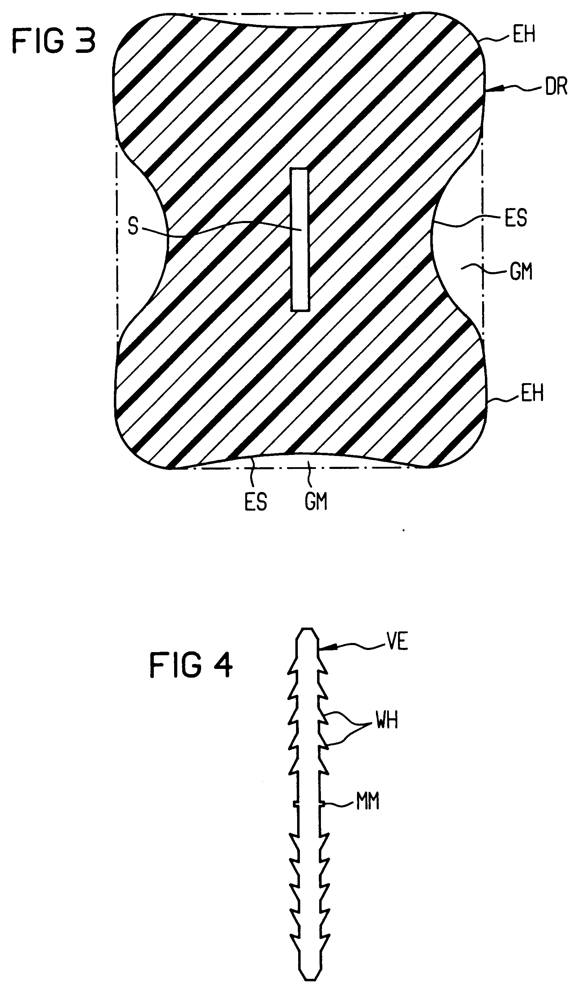

Die Figur 2 verdeutlicht nun einen Dichtungsring DR in Frontansicht, der aus einem langgestreckten Strang eines Elastomers, wie zum Beispiel Silikonkautschuk, zur Kreisform zusammengefügt wird. Diese Zusammenfügung kann entweder durch Verklebung an der Trennstelle TS erfolgen oder durch Zusammensetzung mit Hilfe eines Verbindungselementes VE, das im Innern des Dichtungsringes DR in sackförmigen Schlitzen eingeführt ist und die Trennstelle TS überbrückt. Weiter ist ein Schnitt III-III angedeutet, der der Figur 3 zugrundeliegt.

In Figur 3 wird in einem Querschnitt durch den Dichtungsring DR dargestellt, daß es sich hier nicht um eine Schlauchdichtung sondern um eine Dichtung handelt, die durchgehend aus einem Elastomer besteht. Nur im Bereich der Trennstelle TS (siehe Figur 2) sind an den Enden sackförmige Schlitze S angeordnet, in die bei Bedarf ein Verbindungselement VE zur Überbrückung der Trennstelle TS eingeführt wird. Wenn der Dichtungsstrang durch Extrusion hergestellt wird, ist jedoch ein durchgehender Längshohlraum vorhanden. Die Querschnittsform des erfindungsgemäßen Dichtungsringes DR ist in groben Maßen gesehen rechteckig. Doch sind die Ecken dieser Form abgerundet und die seitlichen Begrenzungen sind nach einwärts eingedellt, so daß Einsenkungen ES gebildet sind. Diese Einsenkungen ES bilden auf den Umfang des Dichtungsringes DR gesehen umlaufende Längshohlräume zwischen jeweils zwei nahe den Rändern gelegenen Erhebungen EH. Damit bilden sich bei Einlage des Dichtungsringes DR entlang der Wandungen der Dichtungsnut jeweils zwei Dichtungslinien aus, zwischen denen sich die Längshohlräume der Einsenkungen ES erstrecken. Damit ist gegenüber einer bisher üblichen Runddichtung mit nur einer Dichtungslinie eine wesentliche Verbesserung der Dichtungsverhältnisse erreicht. Außerdem nehmen diese Längshohlräume bei Verwendung eines zusätzlichen Gleitmittels zunächst überschüssiges Gleitmittel auf, so daß der bisher auftretende Wischeffekt und damit die Gefahr von Unregelmäßigkeiten im Dichtungsbereich weitgehend vermieden werden. Das eingebrachte Gleitmittel GM ist in der Figur 3 gestrichelt angedeutet.

Der Querschnitt des Dichtungsringes DR ist nach vorheriger Beschreibung in der Grundform auch als X-förmig anzusehen.

Die Erhebungen EH bilden dabei die Enden der X-Form, die je nach Ausbildung mehr oder weniger als Dichtlippen gestaltet sind. Sie ergeben nach Einlage an den Wandungen der Dichtungsnut die Dichtlinien. Dazwischen liegend bilden die Einsenkungen ES die Längshohlräume zwischen den X-Enden. Damit läßt sich auch ganz allgemein und kurz die Querschnittgestaltung des erfindungsgemäßen Dichtungsringes charakterisieren, wie es in dieser Kurzform im Patentanspruch 1 aufgenommen ist.

In Figur 4 wird ein Ausführungsbeispiel für ein Verbindungselement VE dargestellt. Es besteht aus einem Metallband, zum Beispiel aus 0,8 mm starkem rostfreiem Stahl, oder aus Kunststoff und weist entlang der Oberfläche Widerhaken WH auf, die ein Herauswandern aus den Schlitzen des Dichtungsringes verhindern. In der Mitte des Verbindungselementes VE ist eventuell eine Mittenanzeige MM angebracht. Das Verbindungselement VE ist zweckmäßigerweise in Umfangrichtung dem Radius des verwendeten Dichtungskörpers entsprechend vorgebogen, so daß eine störungsfreie Auflage auch im Bereich der Trennstelle gegeben ist.

## Patentansprüche

1. Dichtungsring aus elastischem Kunststoffmaterial für Abdichtungen in einer Dichtungsnut zwischen einem scheibenförmigen Dichtungskörper und einem aufgesetzten Muffenrohr bei Kabelgarnituren,
**dadurch gekennzeichnet,**
daß der Dichtungsring (DR) X-förmigen Querschnitt aufweist, so daß parallele umlaufende Dichtungslinien durch die Enden der X-Form in der Dichtungsnut (DN) gebildet sind mit jeweils dazwischen liegenden umlaufenden Längshohlräumen in Form von Einsenkungen (ES).

2. Dichtungsring nach Anspruch 1,
**dadurch gekennzeichnet,**
daß er aus einem langgestreckten Strang ringförmig zusammengeführt und in der Trennstelle (TS) mit einem Kunststoffkleber verklebt ist.

3. Dichtungsring nach Anspruch 1,
**dadurch gekennzeichnet,**
daß er (DR) aus einem langgestreckten Strang besteht, in dem zumindest an beiden Enden Schlitze (S) angeordnet sind und daß in die Schlitze (S) ein Verbindungselement (VE) die Trennstelle (TS) überbrückend eingesetzt ist.

4. Dichtungsring nach Anspruch 3,
**dadurch gekennzeichnet,**
daß das Verbindungsglied (VE) aus einem zugfesten Band aus Metall, vorzugsweise aus rostfreiem Stahl, oder aus Kunststoff besteht.

5. Dichtungsring nach Anspruch 3 oder 4,
**dadurch gekennzeichnet,**
daß das Verbindungselement (VE) Widerhaken (WH) aufweist.

6. Dichtungsring nach einem der Ansprüche 3 bis 5,
**dadurch gekennzeichnet,**
daß das Verbindungselement (VE) dem Durchmesser des Dichtungskörpers (DK) entsprechend vorgeformt ist.

7. Dichtungsring nach einem der vorhergehenden Ansprüche,
**dadurch gekennzeichnet,**
daß ein Gleitmittel, z.B. Silikonfett auf den Dichtflächen aufgebracht ist.

8. Dichtungsring nach Anspruch 7,
**dadurch gekennzeichnet,**
daß die als Längshohlräume ausgebildeten Einsenkungen (ES) mit einem Gleitmittel (GM) gefüllt sind.

9. Dichtungsring nach einem der vorhergehenden Ansprüche,
**dadurch gekennzeichnet,**
daß das Verbindungselement (VE) eine Mittenanzeige (MM) aufweist.
